# EUROPEAN PATENT APPLICATION

(11) **EP 1 746 220 A1**
(43) Date of publication of application: **24.01.2007**
(21) Application number: 05425536.9
(22) Date of filing: 22.07.2005
(51) Int. Cl.: E04G 17/12

(54) **A modular box mould support for concrete casting**

(71) Applicant: Veroni, Francesco, 42048 Rubiera RE (IT)
(72) Inventor: Veroni, Francesco, 42048 Rubiera RE (IT)
(74) Representative: Gotra, Stefano

(57) **Abstract**

The support (1) exhibits a first upright (3) and a second upright (3') which are connected to one another by at least a crossbar (4). The crossbar (4) is defined by a first tubular body (5) and a second tubular body (6), the second tubular body (6) being axially slidable telescopically internally of the first tubular body (5), and blockable on the first tubular body (5) using means for blocking (9).

## Description

The invention is usefully applied in the building sector.

During construction of a building, the starting point on site is the formation of the foundations. These are obtained by first marking out casting channels for the concrete before proceeding with the formation of the channels by scooping using earth moving tools; thereafter, steel reinforcement cages are placed in the channels and the concrete can then be cast.

To facilitate the concrete casting stage, which partially fills the channel, sheet-shaped bodies, known also as moulds, are used, in pairs, to delimit the foundations.

Each mould must obviously be placed vertically with respect to the bottom of the channel, and must also be parallel to the facing mould to guarantee that the future wall to be erected on the foundations will be vertical, and also to guarantee that there will be no planarity problems between the two sides of a same wall.

To facilitate laying the moulds the prior art includes a fixing body which is an upturned-U shaped and includes a pair of uprights connected to a same end of a crossbar.

Once the moulds are positioned, they are coupled internally to the pair of uprights by means of the fixing body.

The use of this device means the moulds are made parallel, as on passing through the pair of uprights they do not distance one from another.

As in some countries there are no laws regulating the maximum thickness of the foundations, the devices have the limitation of enabling laying of foundations which are exclusively of the thickness allowed by the pair of uprights.

Consequently, when there is the need to realise walls of differing thickness, for example 20, 25 and 30 cm., three different series of fixing bodies will be required.

A further disadvantage of the device is its lack of flexibility due to the height of the mould. If there are moulds on site which are higher than the upright, the prior art devices cannot be used.

The main aim of the present invention is to provide a modular support for moulds for concrete formation which will improve wall construction, especially foundations of any thickness.

A further aim of the present invention is to provide a modular support for moulds for the formation of concrete forms, which offers the operator a range of reference thicknesses from those mostly used in the building sector.

A further aim of the invention is to provide a modular support for moulds for the formation of concrete forms, which modular support is adaptable to any height of mould used.

These aims and advantages and more besides are all attained by the invention, as it is characterised in the appended claims.

Further characteristics and advantages of the present invention will better emerge from the detailed description that follows of some preferred but non-exclusive embodiments of the invention, illustrated purely by way of a non-limiting example in the accompanying figures of the drawings, in which:
Figure 1 is a perspective view of a modular support for box moulds for the formation of concrete forms, with a first embodiment of means for blocking;
Figure 2 is a perspective view of a modular support for box moulds for formation of concrete forms, with a second embodiment of means for blocking.

With reference to the figures of the drawings, 1 denotes in its entirety a modular support for box moulds 2, 2', for the formation of concrete forms.

The device 1 comprises a first upright 3 and a second upright 3', parallel to one another and connected by a lower crossbar 4 and an upper crossbar 4'.

The lower crossbar 4 and the upper crossbar 4' and the pair of uprights 3, 3' are preferably defined by tubular elements having a quadrangular section.

The first upright 3 and the second upright 3' each exhibit a vertical direction of development and describe between them a width X defined by the distance between the internal part of the first upright 3 and the internal part of the second upright 3' facing the first upright 3.

Each crossbar 4, 4' is defined by a first tubular body 5 and a second tubular body 6, the second tubular body 6 being axially slidable on the first tubular body 5 and blockable thereon by means for blocking 9.

In more detail, the first tubular body 5 exhibits a first end 5a which is connected to the first upright 3 and a second end 5b which is free and provided with a through hole 7, while the second tubular body 6 exhibits a first end 6a connected to the second upright 3' and a second end 6b immersed in the first tubular body 5.

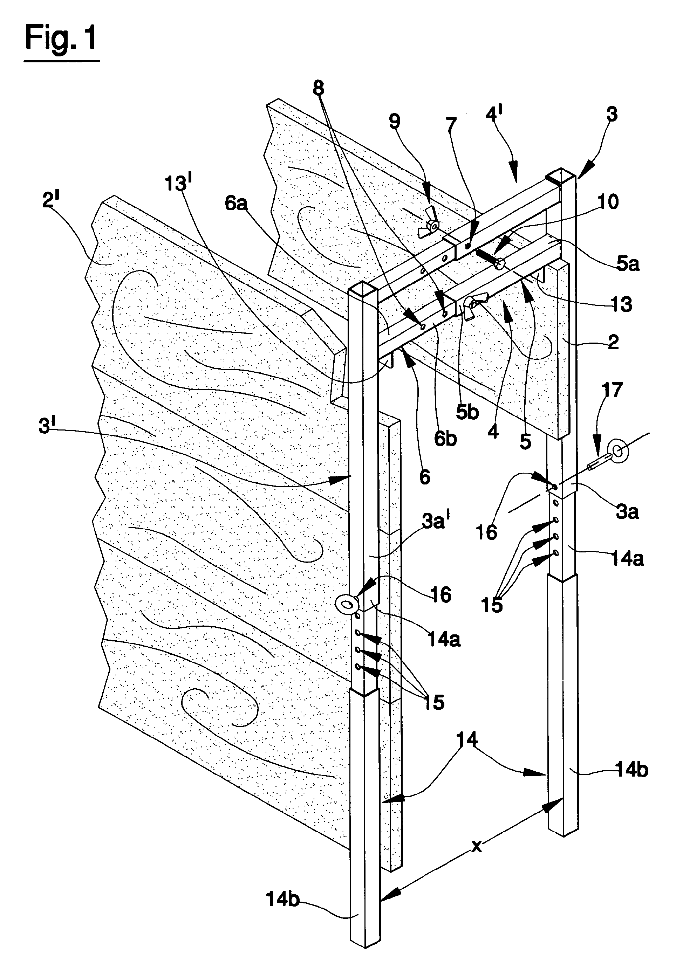

In a first embodiment illustrated in figure 1, the second tubular body 6 exhibits a plurality of through-holes 8, each having a parallel axis to the axis of the through-hole 7.

In this configuration the means for blocking 9, which can be engaged in the through hole 7 and strike against the second tubular body 6 in order to stop the second tubular body 6 sliding on the first tubular body 5, are a connection screw 10 engaged in the through hole 7 and in a hole of the plurality of through-holes 8.

The first embodiment of the support body 1 offers a range of predetermined width X values between the pair of uprights 3, 3', depending on the number of holes in the plurality of holes 8.

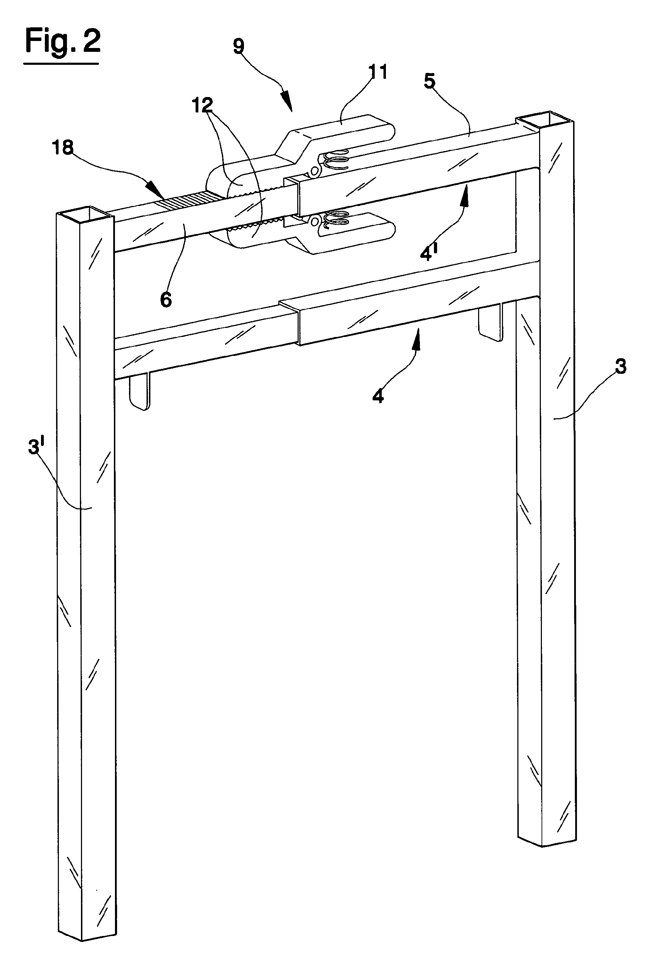

In a second embodiment, illustrated in figure 2, the second tubular body 6 does not afford the plurality of through holes 8.

In this configuration the means for blocking 9 are defined by an elastic grip 11 exhibiting a pair of jaws 12, each strikingly engaged on a plurality of notches 18 afforded on the top of the second tubular body 6.

In this second embodiment of the support body 1, the means for blocking 9 enable any value of the width X to be reached between the pair of uprights 3, 3'.

The lower crossbar 4 further exhibits, in the lower portion thereof, a first projection 13 and a second projection 13', each having a development direction starting from the crossbar and going downwards.

In more detail, the first projection 13 is connected in proximity of the first end 5a of the first tubular body 5 and has a parallel orientation with regard to the first upright 3, which it faces.

Similarly the second projection 13' is connected in proximity of the first end 6a of the second tubular body 6 and has a parallel orientation with regard to the second upright 3', which it faces.

The first upright and the second upright 3' each exhibit a telescopic element 14.

Each telescopic element 14 is defined by a first portion 14a inserted inside the upright 3, 3', provided with a plurality of slots 15, and a second portion 14b exits downstream of the upright 3, 3' and exhibits an external shape which is identical to the shape of the upright 3, 3'.

To facilitate blocking of the telescopic element 14 at a desired extension, each upright 3, 3' exhibits, on the lower end portion 3a, 3a', a cavity 16 which is engageable with a slot belonging to the plurality of slots 15, using a pin 17.

The upper crossbar 4' is used as a gripping element during the initial laying operation.

The support body for box moulds 2, 2' for the formation of concrete forms is as follows.

The moulds 2, 2' are first measured to select the correct height.

When the height is, for example, greater than the height of the pair of uprights 3, 3', the uprights are lengthened using the telescopic elements 14.

During this stage, the pin 17 is removed from the cavity 16 and the slot 15 of the plurality of slots 15 for each upright, and by pulling the second portion 14b the first portion 14a is drawn from the inside of the upright up until the desired height is reached.

Then the pin 17 is reapplied in the cavity 16 and the corresponding slot close to the bottom lower portion 3a.

When this operation is concluded, the moulds 2, 2' are positioned on the bottom of the channel and the width delimited by the moulds 2, 2' is measured, checking against the design specifications.

If the distance X delimited by the uprights 3, 3' is the same as the specified measurement, the moulds 2, 2' are united to the support body 1.

Each mould 2, 2' exhibits an external side thereof in contact against the upright 3, 3' it faces, while its internal side is superiorly forced against the relative projection 13, 13' it is in contact with.

If the distance X delimited by the uprights 3, 3' is not the same as in the design specifications, and adjustment is made using the means for blocking 9.

With the first embodiment of the support body 1 it is sufficient to unscrew the connection screw 10 on each crossbar 4, 4' and, after having neared or distanced the two uprights in order to reach the desired distance X, block the second tubular body 6 on the first tubular body 5 by screwing up the connection screw 10 again.

With the second embodiment of the support body 1, by applying a small pressure on the elastic grip 11 the distance X can be increased or reduced as desired.

While the support body 1 with the elastic grip 11 as the means for blocking 9 enables any thickness of the foundation to be achieved, the support body 1 having as means for blocking 9 the connecting screw 10 provides the user with an immediate reference for a correct foundation thickness as set by the design specifications.

## Claims

1. A modular box mould (2, 2') support (1) for concrete casting, comprising:
a first upright (3) and a second upright (3') which are parallel to one another and together define a distance X between an internal part of the first upright 3 and an internal part of the second upright 3', facing the first upright 3, each having a vertical direction of development;
at least a crossbar (4) joining the first upright (3) and the second upright (3');
**characterised in that** the crossbar (4) comprises:
a first tubular body (5) exhibiting a first end (5a) connected to the first upright (3) and a second end (5b) which is free and exhibits a through-hole (7);
a second tubular body (6) exhibiting a first end (6a) which is connected to the second upright (3') and a second end (6b) which is partially immersed and internally axially slidable with respect to the first tubular body (5);
means for blocking (9) engageable in the through-hole (7) and striking on the second tubular body (6) in order to stop the second tubular body (6) on the first tubular body (5).

2. The modular box mould (2, 2') support (1) of claim 1, **characterised in that** the second tubular body (6) exhibits a plurality of through-holes (8) each having a parallel axis to an axis of the through hole (7) on the first tubular body (5).

3. The modular box mould (2, 2') support (1) of claim 1, **characterised in that** the means for blocking (9) are defined by a connecting screw (10) engaged in the through-hole (7) and in a through-hole of the plurality of through-holes (8).

4. The modular box mould (2, 2') support (1) of claim 1, **characterised in that** the second tubular body (6) exhibits at a top thereof a plurality of notches (18).

5. The modular box mould (2, 2') support (1) of claim 4, **characterised in that** the means for blocking (9) are defined by an elastic grip (11), connected to the first tubular body (5), which elastic grip (11) exhibits a pair of jaws (12) engaged on the plurality of notches (18) afforded on the second tubular body (6).

6. The modular box mould (2, 2') support (1) of claim 3, **characterised in that** the means for blocking (9) facilitate a discrete displacement of the second upright (3') with respect to the second upright (3'), which discrete displacement depends on an interaxis between a through-hole and another through-hole of the plurality of through-holes (8).

7. The modular box mould (2, 2') support (1) of claim 5, **characterised in that** the means for blocking (9) facilitate a discrete displacement of the first upright (3) with respect to the second upright (3'), which discrete displacement depends on a distance between a notch and another notch of the plurality of notches (18).

8. The modular box mould (2, 2') support (1) of claim 1, **characterised in that** the first upright (3), the second upright (3') and the crossbar (4) are each a tubular element having a quadrangular section.

9. The modular box mould (2, 2') support (1) of claim 1, **characterised in that** the first upright (3) and the second upright (3') each exhibit a telescopic element (14).

10. The modular box mould (2, 2') support (1) of claim 9, **characterised in that** the telescopic element (14) exhibits a first portion (14a) inserted internally of the upright (3, 3') and exhibiting a plurality of slots (15), and a second portion (14b) which exits downstream of the upright (3, 3') and exhibits an external perimeter which is equal to an external perimeter of the upright (3, 3').

11. The modular box mould (2, 2') support (1) of claim 1, **characterised in that** the first upright (3) and the second upright (3') each exhibit a cavity (16) at the lower end portion (3a, 3a') thereof.

12. The modular box mould (2, 2') support (1) of claim 10 or 11, **characterised in that** the cavity (16) and the slot of the plurality of slots (15) are engageable by a pin (17) with which each upright (3, 3') can be varied.

13. The modular box mould (2, 2') support (1) of claim 1, **characterised in that** each support (1) exhibits, in addition to the crossbar (4), an upper crossbar (4') which is structurally conformed equally to the crossbar (4) and functions as a gripping element for handling and position operations of the support (1).
